# EUROPÄISCHE PATENTSCHRIFT

(11) **EP 0 999 465 B1**
(45) Veröffentlichungstag und Bekanntmachung des Hinweises auf die Patenterteilung: **20.11.2002**
(21) Anmeldenummer: 00101036.2
(22) Anmeldetag: 13.09.1995
(51) Int. Cl.: G02B 27/28, G02B 7/00

(54) **Vorrichtung zur Strahlteilung**
Beam dividing device
Dispositif séparateur de faisceaux

(30) Priorität: 22.09.1994 DE 4433763
(43) Veröffentlichungstag der Anmeldung: 10.05.2000
(62) Teilanmeldung aus: 95931883.3
(73) Patentinhaber: Heidelberger Druckmaschinen Aktiengesellschaft, 69115 Heidelberg (DE)
(72) Erfinder: Zelenka, Thomas, 28248 Mönkeberg (DE)

(56) Entgegenhaltungen:
- EP-B- 0 054 170
- DE-A- 4 128 468

## Beschreibung

Die Erfindung bezieht sich auf das Gebiet der Reproduktionstechnik und betrifft eine Vorrichtung zur Teilung eines Lichtstrahles in zwei Teilstrahlen.

Eine solche Vorrichtung zur Strahlteilung kann beispielsweise in einer Lichtstrahl-Abtasteinrichtung für Vorlagen-Abtastgeräte oder Aufzeichnungsgeräte Anwendung finden.

Bei einem Vorlagen-Abtastgerät, auch Eingabe-Scanner genannt, überstreicht der Lichtstrahl punkt- und zeilenweise die abzutastende Vorlage, und das von der Vorlage reflektierte oder durchgelassene Abtastlicht wird in einem optoelektronischen Wandler in ein Bildsignal umgewandelt.

Bei einem Aufzeichnungsgerät, auch Recorder, Belichter oder Ausgabe-Scanner genannt, wird der Lichtstrahl durch ein Bildsignal intensitätsmoduliert und der intensitätsmodulierte Lichtstrahl punkt- und zeilenweise über ein lichtempfindliches Aufzeichnungsmaterial geführt.

Bei einem Abtast- oder Aufzeichnungsgerät vom Flachbett-Typ ist die Halterung für die Vorlage bzw. das Aufzeichnungsmaterial eine ebene, relativ zur Lichtstrahl-Abtasteinrichtung bewegte Fläche, die der Lichtstrahl punkt- und zeilenweise überstreicht.

Bei einem Abtast- oder Aufzeichnungsgerät vom Innentrommel-Typ ist die Halterung für die Vorlage bzw. das Aufzeichnungsmaterial als stationäre, zylindersegmentförmige Mulde ausgebildet. Die Lichtstrahl-Abtasteinrichtung bewegt sich parallel zur Längsachse der Mulde, und der Lichtstrahl wird punkt- und zeilenweise senkrecht zur Längsachse radial über die Mulde geführt.

Aus der DE-A-41 28 468 ist bereits eine Lichtstrahl-Abtasteinrichtung mit einer Vorrichtung zu Teilung eines Lichtstrahles in zwei Teilstrahlen bei einem Aufzeichnungsgerät vom Innentrommel-Typ bekannt. Die Strahlteiler-Vorrichtung weist im wesentlichen eine stationäre Lichtquelle und eine Ablenkeinheit auf, die sich um eine optische Achse dreht. Die Ablenkeinheit besteht aus einem Polarisations-Strahlteiler, einem Polarisations-Umsetzer und einem Planspiegel.

Der von der stationären Lichtquelle kommende, polarisierte Lichtstrahl wird in der rotierenden Ablenkeinheit durch den Polarisations-Strahlteiler in zwei Teilstrahlen zerlegt, die von einem Bildsignal intensitätsmoduliert werden. Die beiden intensitätsmodulierten Teilstrahlen treten radial versetzt aus der Ablenkeinheit aus, werden auf ein in einer Belichtungsmulde fixiertes Aufzeichnungsmaterial fokussiert und belichten punkt- und zeilenweise das Aufzeichnungsmaterial. Mit den beiden intensitätsmodulierten Teilstrahlen werden pro Umdrehung der Ablenkeinheit zwei Zeilen auf dem Aufzeichnungsmaterial belichtet, wodurch eine hohe Aufzeichnungsgeschwindigkeit erzielt wird.

Um auch eine hohe Aufzeichnungsqualität zu erzielen, dürfen die beiden Teilstrahlen in der Aufzeichnungsebene keinen Positionsversatz senkrecht zur Zeilenrichtung gegenüber einer Sollposition aufweisen, in der beide Teilstrahlen in Deckung sind. Aufgrund eines solchen Positionsversatzes würden die auf dem Aufzeichnungsmaterial belichteten Zeilen nämlich nicht gleichabständig zueinander verlaufen, und störende Tonwertschwankungen wären die Folge, welche die Aufzeichnungsqualität erheblich mindern.

Die bekannte Strahlteiler-Vorrichtung hat den Nachteil, daß der in der stationären Lichtquelle erzeugte Lichtstrahl sehr genau in Richtung der optischen Achse bzw. der Drehachse der Ablenkeinheit justiert sein muß, damit die Teilstrahlen jeweils nach einer halben Umdrehung der Ablenkeinheit auf einer Zeile in der Aufzeichnungsebene ohne Positionsversatz senkrecht zur Zeilenrichtung auftreffen. Ist der Lichtstrahl bei der bekannten Strahlteiler-Vorrichtung nicht genau ausgerichtet, weisen die beiden Teilstrahlen jedoch einen bezüglich der Sollposition entgegengesetzt gerichteten Positionsversatz auf, d. h. die Strahlpositionen liegen links und rechts der Sollposition, wodurch ein relativ großer Positionsfehler entsteht. Eine genaue Justierung ist aber aufwendig und geht mit der Zeit verloren, so daß eventuell eine Nachjustierung erforderlich wird. Störende Positionsversätze der Teilstrahlen entstehen auch, wenn der Polarisations-Strahlteiler und der Planspiegel in der Ablenkeinheit aufgrund von Fertigungstoleranzen nicht genau zueinander ausgerichtet sind. Zur Kompensation von durch eine ungenaue Ausrichtung der optischen Bauelemente entstandenen Fehlern, weist die bekannte Strahlteiler-Vorrichtung beispielsweise eine einstellbare optische Justiervorrichtung in Form einer Keilplatte auf, die im Strahlengang zwischen Lichtquelle und Ablenkeinheit angeordnet ist. Eine derartige Justierung ist aber relativ aufwendig und ungenau, da sie nur durchgeführt werden kann, wenn sich die Strahlteiler-Vorrichtung nicht dreht.

Aufgabe der vorliegenden Erfindung ist es daher, eine Vorrichtung zur Strahlteilung derart zu verbessern, daß störende relative Positionsfehler der Teilstrahlen zueinander selbsttätig korrigiert werden und daß eine genaue Strahlteilung erreicht wird.

Diese Aufgabe wird durch die Merkmale des Anspruchs 1 gelöst.

Vorteilhafte Weiterbildungen und Ausgestaltungen sind in den Unteransprüchen angegeben.

Die Erfindung wird im folgenden anhand der Fig. 1 bis 3 näher erläutert.

Es zeigen:
- Fig. 1: ein Ausführungsbeispiel für eine Strahlteiler-Vorrichtung,
- Fig. 2: ein Anwendungsbeispiel für die Strahlteiler-Vorrichtung und
- Fig. 3: eine Weiterbildung der Strahlteiler-Vorrichtung.

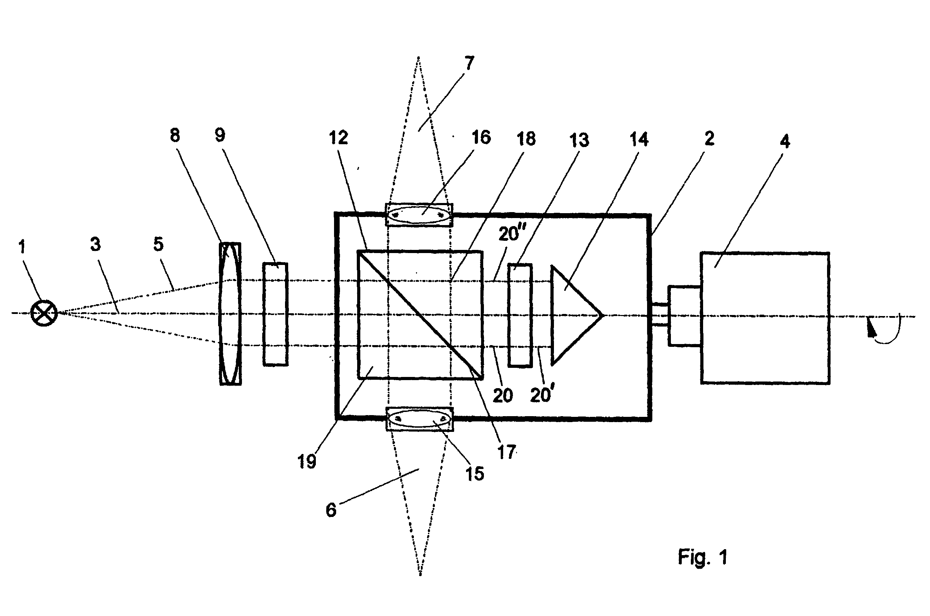

Fig. 1 zeigt ein Ausführungsbeispiel für eine Strahlteiler-Vorrichtung, die aus einer stationären Lichtquelle (1) und aus einer Ablenkeinheit (2) besteht. Die stationäre Lichtquelle (1) ist beispielsweise eine Halbleiter-Laserdiode. Die Ablenkeinheit (2) ist um eine optische Achse (3) drehbar gelagert und wird von einem Motor (4) angetrieben. In der stationären Lichtquelle (1) wird ein parallel zur optischen Achse (3) verlaufender Lichtstrahl (5) erzeugt. Der Lichtstrahl (5) wird in der Ablenkeinheit (2) in zwei radial zu der optischen Achse (3) verlaufende Teilstrahlen (6,7) zerlegt.

Die Strahlteilung kann mit einem nicht polarisierten oder einem polarisierten Lichtstrahl (5) durchgeführt werden. Im Ausführungsbeispiel erzeugt die Lichtquelle (1) einen linear polarisierten Lichtstrahl (5), der in einen zirkular polarisierten Lichtstrahl (5) umgesetzt wird. Grundsätzlich kann auch jede andere Lichtquelle, die einen nicht polarisierten Lichtstrahl erzeugt, in Verbindung mit einem Polarisator verwendet werden, um den linear oder zirkular polarisierten Lichtstrahl (5) zu erzeugen.

Zwischen der Lichtquelle (1) und der Ablenkeinheit (2) sind auf der optischen Achse (3) ein Linsensystem (8) und ein erster Polarisations-Umsetzer (9) zur Transformation einer linearen Polarisation in eine zirkulare Polarisation angeordnet. Der erste Polarisations-Umsetzer (9) kann entfallen, wenn zur Strahlteilung ein nicht polarisierter oder bereits ein zirkularpolarisierter Lichtstrahl (5) herangezogen wird.

Im dargestellten Ausführungsbeispiel erzeugt das Linsensystem (8) einen parallelen, d. h. nicht vorfokussierten Lichtstrahl (5), und der Polarisations-Umsetzer (9) ist als Wellenplatte, beispielsweise als λ/4-Platte, ausgebildet.
Die Ablenkeinheit (2) besteht im wesentlichen aus einem Polarisations-Strahlteiler (12), einem zweiten Polarisations-Umsetzer (13) und einem Reflektor (14). Die optischen Elemente sind auf der optischen Achse (3) hintereinander angeordnet und miteinander zu einer kompakten Einheit, beispielsweise durch Klebung, zusammengefaßt.

Der Polarisations-Strahlteiler (12) hat eine Polarisationsschicht (17), von der ein polarisierter Lichtstrahl in Abhängigkeit von der Polarisationsrichtung reflektiert oder durchgelassen wird. Die Polarisationsschicht (17) wird in der Regel aus mehreren dielektrischen Schichten mit unterschiedlichen Brechungsindizes gebildet. Alternativ kann die Polarisationsschicht (17) aus einer polarisierenden Folie aus Kunststoff oder einem anderen geeigneten Material bestehen. Als Träger für die Polarisationsschicht (17) kann eine Glasplatte oder, wie im Ausführungsbeispiel, ein aus zwei Dreikantprismen (18, 19) gebildeter Würfel verwendet werden, wobei die Polarisationsschicht (17) im Bereich der einander zugewandten Begrenzungsflächen der Dreikantprismen (18, 19) angeordnet ist.

Der zweite Polarisations-Umsetzer (13) ist beispielsweise eine doppelbrechende Platte, die zusammen mit dem Reflektor (14) eine 90°-Drehung der Polarisationsebene eines linear polarisierten Lichtstrahles bewirkt.

Zur Vermeidung der in der Beschreibungseinleitung erwähnten aufwendigen Justierung des aus der stationären Lichtquelle (1) austretenden Lichtstrahles (5) in Richtung der optischen Achse (3) ist der Reflektor (14) erfindungsgemäß als Tripelprisma bzw. Tripelspiegel ausgebildet. Tripelprisma weist drei unter 90° zueinander stehende Spiegelflächen auf, die an einer Spiegelecke aneinanderstoßen. Ein unter einem beliebigen Winkel in das Tripelprisma einfallender Lichtstrahl kehrt nach dreifacher Reflexion um 180° abgelenkt parallel zum einfallenden Lichtstrahl zurück, wobei die Richtungsumkehr invariant gegen eine Drehung des Tripelprismas um eine beliebige Achse ist.

Zur Fokussierung der Teilstrahlen (6, 7) auf eine Bezugsebene weist die Strahlteiler-Vorrichtung optische Mittel auf.
Im dargestellten Ausführungsbeispiel, bei dem ein nicht vorfokussierter Lichtstrahl (5) geteilt wird, wird der erste Teilstrahl (6) durch eine in seinem Strahlengang angeordnete Linse (15) auf die Bezugsebene fokussiert. Alternativ dazu kann die Linse (15) auch im Strahlengang des Lichtstrahles (5) zwischen dem Linsensystem (8) und der Ablenkeinheit (2) angeordnet werden, beispielsweise stationär hinter dem ersten Polarisations-Umsetzer (9) oder vor dem Polarisations-Strahlteiler (12) in der rotierenden Ablenkeinheit (2). Der zweite Teilstrahl (7) wird durch eine in seinem Strahlengang angeordnete Linse (16) auf die Bezugsebene fokussiert. Alternativ dazu kann die Linse (16) auch in der rotierenden Ablenkeinheit (2) zwischen Polarisations-Strahlteiler (12) und Reflektor (14) angeordnet werden. Anstelle von jeweils einer Linse kann auch eine Linsenkombination verwendet werden.

Wird, wie im dargestellten Ausführungsbeispiel, ein nicht vorfokussierter Lichtstrahl (5) geteilt, haben die zur Fokussierung des ersten und zweiten Teilstrahles (6, 7) verwendeten Linsen gleiche optische Parameter. Wird dagegen ein durch eine entsprechende Ausbildung und Anordnung des Linsensystems (8) vorfokussierter Lichtstrahl geteilt, haben die entsprechenden Linsen zur Fokussierung des ersten und zweiten Teilstrahles (6, 7) unterschiedliche optische Parameter, wobei die Fokussiermittel in diesem Fall für einen der Teilstrahlen (6, 7) ganz entfallen können.

Nach der Beschreibung des Aufbaus der Strahlteiler-Vorrichtung wird deren Wirkungsweise näher erläutert.

Der von der Lichtquelle (1) erzeugte linear polarisierte Lichtstrahl (5) wird zunächst von dem Linsensystem (8) kollimiert und dann in dem ersten Polarisations-Umsetzer (9) in einen zirkular polarisierten Lichtstrahl (5) umgewandelt. Durch die Zirkularpolarisation des Lichtstrahles (5) wird erreicht, daß die Polarisationswirkung der Polarisationsschicht (17) des Polarisations-Strahlteilers (12) unabhängig vom jeweiligen Drehwinkel des Polarisations-Strahteilers (12) bzw. der rotierenden Ablenkeinheit (2) ist.

Der zirkular polarisierte Lichtstrahl (5) fällt auf die Polarisationsschicht (17) des Polarisations-Strahlteilers (12) und wird dort in zwei linear polarisierte Lichtkomponenten zerlegt, wobei die Lichtleistung des Lichtstrahles (5) nahezu verlustfrei halbiert wird. Die erste linear polarisierte Lichtkomponente wird an der Polarisationsschicht (17) reflektiert und bildet den ersten Teilstrahl (6). Verläuft der Lichtstrahl (5) aufgrund einer exakten Justierung in Richtung der optischen Achse (3) und liegt die Reflexionsschicht (17) unter einem Winkel von 45°, so tritt der erste Teilstrahl (6) senkrecht zur optischen Achse (3) aus der Ablenkeinheit (2) aus und erreicht die Bezugsebene in der Sollposition. Fehlt eine Justierung oder wurde eine Justierung nicht exakt durchgeführt, trifft der Lichtstrahl (5) unter einem Winkel zur optischen Achse (3) auf die Polarisationsschicht (17). Der erste Teilstrahl (6) tritt mit einer entsprechenden Winkelabweichung von der Senkrechten aus der Ablenkeinheit (2) aus und erreicht die Bezugsebene mit einem Positionsversatz gegenüber der Sollposition.

Die zweite linear polarisierte Lichtkomponente (20) wird durch die Polarisationsschicht (17) des Polarisations-Strahlteilers (12) durchgelassen und in Richtung des Reflektors (14) auf den zweiten Polarisations-Umsetzer (13) geleitet, der den Polarisationszustand der linear polarisierten Lichtkomponente (20) verändert. Die Lichtkomponente (20') wird an dem Reflektor (14) reflektiert, wobei der Polarisationszustand wieder verändert wird. Die reflektierte Lichtkomponente (20') durchläuft erneut den zweiten Polarisations-Umsetzer (13) aber in entgegengesetzter Richtung. Dadurch wird eine Drehung der Polarisationsebene um 90° gegenüber der Polarisationsebene der in Richtung des Reflektors (14) laufenden Lichtkomponente (20) erreicht, wodurch die von dem Reflektor (14) kommende Lichtkomponente (20') an der Polarisationsschicht (17) des Polarisations-Strahlteilers (12) als zweiter Teilstrahl (7) reflektiert wird.

Verläuft der Lichtstrahl (5) aufgrund einer exakten Justierung wiederum in Richtung der optischen Achse (3), tritt der zweite Teilstrahl (7) senkrecht zur optischen Achse (3) aus der Ablenkeinheit (2) aus und erreicht nach einer halben Umdrehung der Ablenkeinheit (2) die Bezugsebene ebenfalls in der Sollposition auf einer Zeile.
Tritt der Lichtstrahl (5) aufgrund einer fehlenden oder ungenauen Justierung dagegen um einen Winkel gegenüber der optischen Achse (3) geneigt in den Polarisations-Strahlteiler (12) ein, fällt die durchgelassene Lichtkomponente auch unter diesem Winkel auf den erfindungsgemäßen Reflektor (14) und wird von diesem in sich, d.h. unter Beibehaltung des jeweiligen Winkels, auf den Polarisations-Umsetzer (13) und die Polarisationsschicht (17) des Polarisations-Strahlteilers (12) zurückgeworfen. Der zweite Teilstrahl (7) tritt dadurch zwar immer noch mit einer Winkelabweichung von der Senkrechten aus der Ablenkeinheit (2) aus, aber die Winkelabweichung des zweiten Teilstrahles (7) hat, bezogen auf die Sollposition, dieselbe Richtung wie die Winkelabweichung des ersten Teilstrahles (6).

Dadurch, daß sich nunmehr die Winkelfehler aufgrund des Tripelprismas (14) auf beide Teilstrahlen (6, 7) identisch auswirken, wird in vorteilhafter Weise der störende Einfluß des Positionsversatzes der beiden Teilstrahlen (6, 7) beispielsweise, auf die Aufzeichnungsqualität eines Recorders verkleinert.

Die Verwendung des Tripelprismas (14) hat darüber hinaus den Vorteil, daß Lagetoleranzen, die beim Einbau des Reflektors in die Ablenkeinheit (2) entstehen, im Gegensatz zu denen eines Planspiegels, unkritisch in Bezug auf den Positionsversatz der Teilstrahlen (6, 7) sind.

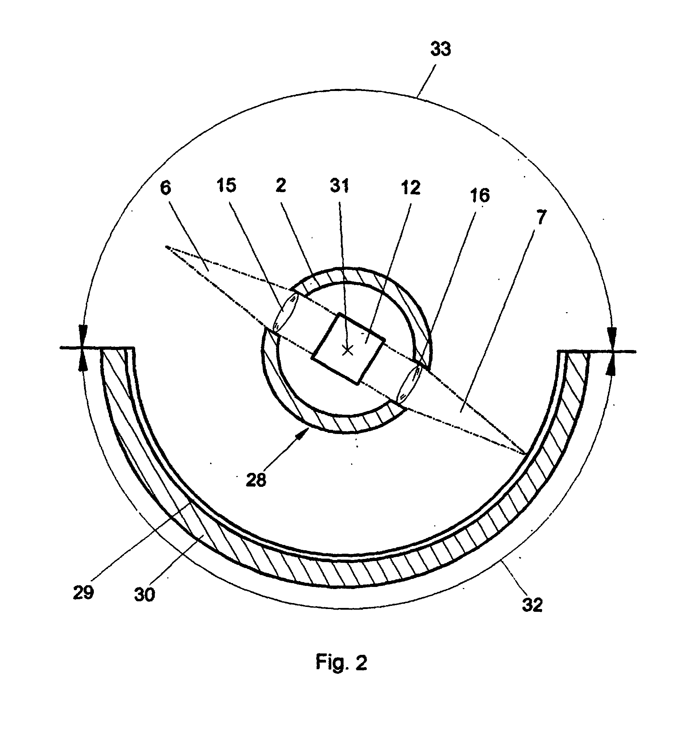

Fig. 2 zeigt ein Anwendungsbeispiel für die erfindungsgemäße Strahlteiler-Vorrichtung in einer Abtasteinrichtung (28) eines nach dem Innentrommelprinzip arbeitenden Recorders (Belichters). Bei einem solchen Innentrommel-Recorder ist das Aufzeichnungsmaterial (29) an der Innenwand eines Zylindersegments als Belichtungsmulde (30) fixiert. Die Abtasteinrichtung (28) rotiert um die Längsachse (31) der Belichtungsmulde (30). Die Abtasteinrichtung (28) weist die in Fig. 1 dargestellte Strahlteiler-Vorrichtung auf. Die Teilstrahlen (6, 7) werden von einem Bildsignal helligkeitsmoduliert und zur Belichtung punkt- und zeilenweise über das Aufzeichnungsmaterial (29) geführt. Dabei bewegt sich die Abtasteinrichtung (28) in Richtung der Längsachse (31) mittels eines nicht dargestellten Antriebes. Jede Umdrehung der Lichtstrahl-Ablenkvorrichtung ist in einen Arbeitsbereich (32) bzw. ein Arbeits-Zeitintervall und einen Rückführungsbereich (33) bzw. ein Rückführungs-Zeltintervall unterteilt. Während der eine Teilstrahl (6 bzw. 7) jeweils aktiv ist und zur Belichtung des Aufzeichnungsmaterials (29) den Arbeitsbereich (32) von dem Anfang einer Zeile zu dem Ende der Zeile überstreicht, wird der jeweils inaktive Teilstrahl (7 bzw. 6) in dem Rückführungsbereich (33) zum Anfang der nächsten Zeile zurückgeführt. Durch die Aufzeichnung mit zwei Teilstrahlen (6, 7) wird der Nutzungsgrad des Belichters verdoppelt.

In den bisher beschriebenen Strahlteiler-Vorrichtungen zur Anwendung in Belichtem haben die beiden belichtenden Teilstrahlen (6, 7) jeweils 50% der Lichtleistung des der Strahlteiler-Vorrichtung zugeführten Eingangslichtstrahles (5). Zur Belichtung von bestimmten Materialen wird aber oft eine größere Lichtleistung benötigt. Um eine größere Lichtleistung zu erreichen, wird erfindungsgemäß vorgeschlagen, die Entstehung des jeweils inaktiven Teilstrahls (6 bzw. 7) während des Rückführungs-Intervalles zu verhindern, so daß keine Aufteilung der Lichtleistung erfolgt, und der jeweils aktive Teilstrahl (7 bzw. 6) nahezu die volle Lichtleistung des Eingangslichtstrahles (5) aufweist.

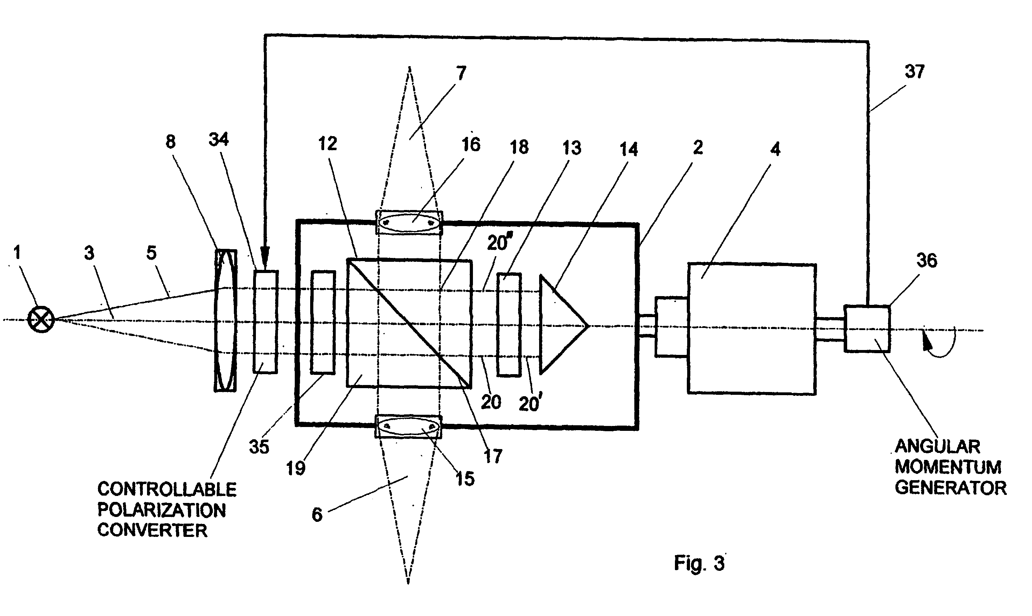

Fig. 3 zeigt eine vorteilhafte Weiterbildung einer Strahlteiler-Vorrichtung mit einem abschaltbaren inaktiven Teilstrahl (6 bzw. 7) im jeweiligen Rückführungsintervall zur Vergrößerung der Lichtleistung des jeweils aktiven Teilstrahles (7 bzw. 6).

Die Strahlteiler-Vorrichtung nach Fig. 3 unterscheidet sich von der nach Fig. 1 dadurch, daß der stationäre erste Polarisations-Umsetzer (9) durch einen steuerbaren Polarisations-Umsetzer (34) ersetzt ist und daß in der rotierenden Ablenkeinheit (2) vor dem Polarisations-Strahlteiler (12) ein Polarisations-Umsetzer (35) angeordnet ist, der mit dem Polarisations-Strahlteiler (12) beispielsweise durch Klebung verbunden sein kann. Femer ist auf der optischen Achse ein programmierbarer Drehimpulsgeber (36) angeordnet, der mit dem Motor (4) mechanisch verbunden ist und ein zweipegliges Steuersignal über eine Leitung (37) an den steuerbaren Polarisations-Umsetzer (34) liefert.

Der Drehimpulsgeber (36) ist derart programmierbar, daß in jeder Umdrehung der Ablenkeinheit (2) das zweipeglige Steuersignal während des Arbeitsbereiches (Fig. 4; 32) des einen Teilstrahles (6 bzw. 7) den einen Signalpegel und während des Rückführungsbereiches (Fig. 4; 33) des anderen Teilstrahles (7 bzw. 6) den anderen Signalpegel einnimmt. Somit lassen sich die Längen der Arbeitsbereiche und der Rückführungsbereiche der Teilstrahlen (6, 7) in vorteilhafter Weise durch die Art der Programmierung unabhängig voneinander festlegen.

Der steuerbare Polarisations-Umsetzer (34) enthält einen elektrooptischen Modulator, welcher die Linearpolarisation eines einfallenden Lichtstrahles in eine Zirkularpolarisation umsetzt und die Drehrichtung der Zirkularpolarisation in Abhängigkeit von dem jeweiligen Signalpegel des Steuersignals auf der Leitung (37) umschaltet. Der Polarisations-Umsetzer (34) ist als Wellenplatte, beispielsweise als λ/4-Platte, ausgebildet.

Die lineare Polarisation des von der Lichtquelle (1) kommenden Lichtstrahls (5) wird in dem steuerbaren Polarisations-Umsetzer (34) zunächst in eine zirkulare Polarisation umgewandelt. In Abhängigkeit von dem jeweiligen Signalpegel des Steuersignals wird dann die Drehrichtung der Zirkularpolarisation umgeschaltet. Die Umsetzung der Linearpolarisation des Lichtstrahles (5) in die Zirkularpolarisation und die Änderung der Drehrichtung der Zirkularpolarisation kann selbstverständlich auch in getrennten Baugruppen vorgenommen werden.

In dem mit der Ablenkeinheit (2) rotierenden Polarisations-Umsetzer (35) wird dann die zirkulare Polarisation des Lichtstrahles (5) in Abhängigkeit von der jeweiligen Drehrichtung der Zirkularpolarisation in eine lineare Polarisation mit einem ersten Polarisationszustand, beispielsweise eine lineare Polarisation mit einer 0°- Polarisationsebene, oder mit einem zweiten Polarisationszustand, beispielsweise in eine linare Polarisation mit einer 90°-Polarisationsebene, umgesetzt. Weist der linear polarisierte Lichtstrahl (5) den ersten Polarisationszustand auf, wird der Lichtstrahl (5) an der Polarisationsschicht (17) des Polarisations-Strahlteilers (12) reflektiert, aber nicht von dieser durchgelassen, so daß nur der erste Teilstrahl (6) mit nahezu der vollen Lichtleistung des Lichtstrahles (5) entsteht. Weist der linear polarisierte Lichtstrahl (5) dagegen den zweiten Polarisationszustand auf, wird der Lichtstrahl (5) von der Polarisationsschicht (17) des Polarisations-Strahlteilers (12) durchgelassen, aber nicht an dieser reflektiert, so daß nur der zweite Teilstrahl (7) mit nahezu der vollen Lichtleistung des Lichtstrahles (5) gebildet wird.

Die erfindungsgemäße Strahlteiler-Vorrichtung kann bei Aufzeichnungsgeräten vom Innentrommel-Typ oder vom Flachbett-Typ Anwendung finden. Es liegt im Rahmen der Erfindung, die Strahlteiler-Vorrichtung auch bei Vorlagen-Abtastgeräten einzusetzen.

## Patentansprüche

1. Vorrichtung zur Teilung eines Lichtstrahles in zwei Teilstrahlen, bestehend aus
- einer stationären Lichtquelle (1) zur Erzeugung eines Lichtstrahles (5) entlang einer optischen Achse (3),
- einem in der optischen Achse (3) vor der Lichtquelle (1) angeordneten Objektiv (8) und
- einer von dem Lichtstrahl (5) beaufschlagten, um die optische Achse (3) rotierbaren Ablenkeinheit (2), welche enthält
- einen Polarisations-Strahlteiler (12), welcher den Lichtstrahl (5) in eine reflektierte, im wesentlichen senkrecht zur optischen Achse (3) verlaufende polarisierte Lichtkomponente als ersten Teilstrahl (6) und in eine durchgelassene, im wesentlichen in Richtung der optischen Achse (3) verlaufende polarisierte Lichtkomponente (20) zerlegt,
- einen auf der optischen Achse (3) hinter dem Polarisations-Strahlteiler (12) angeordneten Polarisations-Umsetzer(13) und einen Reflektor (14), welche die durchgelassene Lichtkomponente (20) in eine bezüglich der Polarisationsrichtung in der Phase um 90° gedrehte polarisierte Lichtkomponente (20') transformieren, wobei die auf den Polarisations-Strahlteiler (12) zurückgeworfene gedrehte polarisierte Lichtkomponente (20'') an dem Polarisations-Strahlteiler (12) als zweiter Teilstrahl (7) reflektiert wird, sowie
- Fokussierungsmittel (15, 16) für die Teilstrahlen (6, 7) auf eine Bezugsfläche, **dadurch gekennzeichnet, daß** zur Korrektur von relativen Positionsversätzen der Teilstrahlen (6, 7) zueinander der Reflektor (14) als Tripelprisma ausgebildet ist.

2. Vorrichtung nach Anspruch 1, **dadurch gekennzeichnet, daß** die Fokussierungsmittel (15, 16) für den ersten Teilstrahl (6) aus mindestens einer Linse (15) bestehen, die zwischen Objektiv (8) und Polarisations-Strahlteiler (12) und/oder im Strahlengang des ersten Teilstrahles (6) angeordnet ist.

3. Vorrichtung nach Anspruch 1 oder 2, **dadurch gekennzeichnet, daß** die Fokussierungsmittel (15, 16) für den zweiten Teilstrahl (7) aus mindestens einer Linse (16) bestehen, die zwischen dem Polarisations-Strahlteiler (12) und dem Reflektor (14) und/oder im Strahlengang des zweiten Teilstrahles (7) angeordnet ist.

4. Vorrichtung nach einem der Ansprüche 1 bis 3, **dadurch gekennzeichnet, daß** die Lichtquelle (1) einen zirkular polarisierten Lichtstrahl (5) erzeugt.

5. Vorrichtung nach einem der Ansprüche 1 bis 4, **dadurch gekennzeichnet, daß**
- die Lichtquelle (1) einen linear polarisierten Lichtstrahl (5) erzeugt und
- auf der optischen Achse (3) zwischen der Lichtquelle (1) und der rotierender Ablenkeinheit (2) ein weiterer Polarisations-Umsetzer (9) angeordnet ist, welcher die lineare Polarisation des Lichtstrahles (5) in eine zirkulare Polarisation umsetzt.

6. Vorrichtung nach einem der Ansprüche 1 bis 5, **dadurch gekennzeichnet, daß** die Polarisations-Umsetzer (9, 13) als doppelbrechende Platten, beispielsweise als λ/4-Platten, ausgebildet sind.

7. Vorrichtung nach einem der Ansprüche 1 bis 6, **dadurch gekennzeichnet, daß** zur Vergrößerung der Lichtleistung des jeweils aktiven Teilstrahles (6 bzw. 7)
- die Lichtquelle (1) einen zirkular polarisierten Lichtstrahl (5) erzeugt,
- vor der Ablenkeinheit (2) ein steuerbarer Polarisations-Umsetzer (34) stationär angeordnet ist, welcher in Abhängigkeit von einem Steuersignal die Drehrichtung der Zirkularpolarisation des Lichtstrahles (5) umschaltet und
- in der rotierenden Ablenkeinheit (2) vor dem Polarisations-Strahlteiler (12) ein weiterer Polarisations-Umsetzer (35) angeordnet ist, welcher die zirkulare Polarisation des Lichtstrahls (5) in Abhängigkeit von der jeweiligen Drehrichtung der Zirkularpolarisation in eine lineare Polarisation mit einem ersten Polarisationszustand oder einem zweiten Polarisationszustand umwandelt, wobei der linear polarisierte Lichtstrahl (5) mit dem ersten Polarisationszustand an dem Polarisations-Strahlteiler (12) zur Generierung des aktiven Teilstrahles (6 bzw. 7) reflektiert, aber von dem Polarlsations-Strahlteiler (12) zur Generierung des inaktiven Teilstrahles (7 bzw. 6) nicht durchgelassen wird und wobei der linear polarisierte Lichtstrahl (5) mit dem zweiten Polarisationszustand von dem Polarisations-Strahlteiler (12) zur Generierung des aktiven Teilstrahles (6 bzw. 7) durchgelassen, aber an dem Polarisations-Strahlteiler (12) zur Generierung des inaktiven Teilstrahles (7 bzw. 6) nicht reflektiert wird.

8. Vorrichtung nach Anspruch 7, **dadurch gekennzeichnet, daß** der steuerbare Polarisations-Umsetzer (34) als elektrooptischer Modulator ausgebildet ist.

9. Vorrichtung nach Anspruch 7 oder 7, **dadurch gekennzeichnet, daß** der Polarisations-Umsetzer (35) als Wellenplatte ausgebildet ist.

10. Vorrichtung nach einem der Ansprüche 7 bis 9, **gekennzeichnet durch** einen mit der Ablenkeinheit (2) gekoppelten Drehimpulsgeber (36), welcher das Steuersignal für den steuerbaren Polarisations-Umsetzer (35) erzeugt, wobei das Steuersignal in jeder Umdrehung der Ablenkeinheit (2) ein Arbeits-Zeitintervall festlegt, in dem ein Teilstrahl (6 bzw. 7) eingeschaltet und der andere Teilstrahl (7 bzw. 6) abgeschaltet ist.

## Claims

1. Apparatus for splitting a light beam into two part-beams, comprising
- a fixed light source (1) for producing a light beam (5) along an optical axis (3),
- an objective (8) arranged in the optical axis (3) in front of the light source (1) and
- a deflector unit (2) which lies in the path of the light beam (5) and is rotatable about the optical axis (3), and comprises
- a polarization beam splitter (12) which divides the light beam (5) into a reflected polarized light component extending essentially perpendicularly to the optical axis (3) as a first part-beam (6) and a transmitted polarized light component (20) extending essentially in the direction of the optical axis (3),
- a polarization converter (13) arranged on the optical axis (3) behind the polarization beam splitter (12) and a reflector (14), which transform the transmitted light component (20) into a polarized light component (20') rotated in phase through 90° with respect to the polarization direction, the rotated polarized light component (20") reflected back to the polarization beam splitter (12) being reflected at the polarization beam splitter (12) as a second part-beam (7), and
- means (15, 16) for focusing the part-beams (6, 7) on to a reference surface, **characterized in that** for the correction of relative positional misalignments of the part-beams (6, 7) with respect to one another, the reflector (14) is in the form of a triple prism.

2. Apparatus according to Claim 1, **characterized in that** the focusing means (15, 16) for the first part-beam (6) comprise at least one lens (15) arranged between objective (8) and polarization beam splitter (12) and/or in the ray path of the first part-beam (6).

3. Apparatus according to Claim 1 or Claim 2, **characterized in that** the focusing means (15, 16) for the second part-beam (7) comprise at least one lens (16) arranged between the polarization beam splitter (12) and the reflector (14) and/or in the ray path of the second part-beam (7).

4. Apparatus according to any one of Claims 1 to 3, **characterized in that** the light source (1) produces a light beam (5) with circular polarization.

5. Apparatus according to any one of Claims 1 to 4, **characterized in that**
- the light source (1) produces a light beam (5) with linear polarization and
- a further polarization converter (9) which converts the linear polarization of the light beam (5) into a circular polarization is arranged on the optical axis (3) between the light source (1) and the rotating deflector unit (2).

6. Apparatus according to any one of Claims 1 to 5, **characterized in that** the polarization converters (9, 13) are in the form of birefringent plates, for example quarter-wave plates.

7. Apparatus according to any one of Claims 1 to 6, **characterized in that**, with a view to increasing the light output of the active part-beam (6 or 7, as the case may be),
- the light source (1) produces a light beam (5) with circular polarization,
- a controllable polarization converter (34) which switches the sense of rotation of the circular polarization of the light beam (5) as a function of a control signal is fixedly arranged in front of the deflector unit (2) and
- a further polarization converter (35), which, depending on the sense of rotation of the circular polarization of the light beam (5), converts the circular polarization of the light beam (5) into a linear polarization with a first polarization condition or a second polarization condition, is arranged in the rotating deflector unit (2) in front of the polarization beam splitter (12), the linearly polarized light beam (5) with the first polarization condition being reflected at the polarization beam splitter (12) to generate the active part-beam (6 or 7) but not transmitted through the polarization beam splitter (12) to generate the inactive part-beam (7 or 6), and the linearly polarized light beam (5) with the second polarization condition being transmitted through the polarization beam splitter (12) to generate the active part-beam (6 or 7) but not reflected at the polarization beam splitter (12) to generate the inactive part-beam (7 or 6).

8. Apparatus according to Claim 7, **characterized in that** the controllable polarization converter (34) is in the form of an electrooptical modulator.

9. Apparatus according to Claim 7 or 8, **characterized in that** the polarization converter (35) is in the form of a wave plate.

10. Apparatus according to any one of Claims 7 to 9, **characterized by** a rotary pulse generator (36) which is coupled with the deflector unit (2) and which generates the control signal for the controllable polarization converter (35), the control signal determining an operating time interval in every revolution of the deflector unit (2) in which one part-beam (6 or 7) is switched on and the other part-beam (7 or 6) is switched off.

## Revendications

1. Dispositif pour diviser un faisceau lumineux en deux faisceaux partiels comprenant :
- une source lumineuse fixe (1) générant un faisceau lumineux (5) suivant un axe optique (3),
- un objectif (8) installé dans l'axe optique (3) devant la source lumineuse (1) et
- une unité de déflexion (2) susceptible de tourner autour de l'axe optique (3) et recevant le faisceau lumineux (5), cette unité comportant
- un diviseur de faisceau à polarisation (12) qui décompose le faisceau lumineux (5) en une première composante de lumière, réfléchie, à polarisation essentiellement perpendiculaire à l'axe optique (3) comme premier faisceau partiel (6) et une composante de lumière (20), traversante, à polarisation essentiellement dans la direction de l'axe optique (3),
- un convertisseur de polarisation (13) installé sur l'axe optique (3) derrière le diviseur de faisceau à polarisation (12) et un réflecteur (14) qui transforment la composante de lumière traversante (20) en une composante de lumière (20') dont la polarisation a été tournée de 90° par rapport à la direction de polarisation en phase, et dont la composante de lumière (20") polarisée, tournée, renvoyée vers le diviseur de polarisation (12) est réfléchie par le diviseur de faisceau à polarisation (12) comme second faisceau partiel (7), ainsi que
- des moyens de focalisation (15, 16) pour les faisceaux partiels (6, 7) sur une surface de référence,
**caractérisé en ce que**
le réflecteur (14) est réalisé sous la forme d'un triple prisme pour corriger les décalages de position relative des faisceaux partiels (6, 7).

2. Dispositif selon la revendication 1,
**caractérisé en ce que**
les moyens de focalisation (15, 16) du premier faisceau partiel (6) se composent d'au moins une lentille (15) installée entre l'objectif (8) et le diviseur de faisceau de polarisation (12) et/ou dans le chemin du premier faisceau partiel (6).

3. Dispositif selon l'une quelconque des revendications 1 ou 2,
**caractérisé en ce que**
les moyens de focalisation (15, 16) du second faisceau partiel (7) se composent d'au moins une lentille (16) installée entre le diviseur de faisceau de polarisation (12) et le réflecteur (14) et/ou dans le chemin du second faisceau partiel (7).

4. Dispositif selon l'une quelconque des revendications 1 à 3,
**caractérisé en ce que**
la source lumineuse (1) génère un faisceau lumineux (5) à polarisation circulaire.

5. Dispositif selon l'une quelconque des revendications 1 à 4,
**caractérisé en ce que**
- la source lumineuse (1) génère un faisceau lumineux (5) à polarisation linéaire et
- sur l'axe optique (3) entre la source lumineuse (1) et l'unité de déflexion rotative (2) il est prévu un autre convertisseur de polarisation (9) qui transforme la polarisation linéaire du faisceau lumineux (5) en une polarisation circulaire.

6. Dispositif selon l'une quelconque des revendications 1 à 5,
**caractérisé en ce que**
le convertisseur de polarisation (9, 13) est réalisé sous la forme de plaques à double réfraction, par exemple des plaques quart d'onde (λ/4).

7. Dispositif selon l'une quelconque des revendications 1 à 6,
**caractérisé en ce que**
pour augmenter la puissance lumineuse de chaque faisceau partiel actif (6, 7),
- la source lumineuse (1) génère un faisceau lumineux (5) à polarisation circulaire,
- un convertisseur de polarisation (34) commandé, stationnaire, est installé devant l'unité de déflexion (2) et en fonction d'un signal de commande il commute le sens de rotation de la polarisation circulaire du faisceau lumineux (5) et
- un autre convertisseur de polarisation (35) est installé dans l'unité de déflexion rotative (2) en amont du diviseur de faisceau de polarisation (12), cet autre convertisseur transformant la polarisation circulaire du faisceau lumineux (5) suivant le sens de rotation de la polarisation circulaire en une polarisation linéaire avec un premier ou un second état de polarisation,
le faisceau lumineux (5) à polarisation linéaire étant réfléchi avec le premier état de polarisation sur le diviseur de faisceau de polarisation (12) pour générer le faisceau partiel actif (6 ou 7), ce faisceau étant bloqué par le diviseur de faisceau de polarisation (12) pour générer le faisceau partiel inactif (7 ou 6), et
le faisceau lumineux polarisé (5), avec le second état de polarisation, traverse le diviseur de faisceau de polarisation (12) pour générer le faisceau partiel actif (6 ou 7) mais il n'est pas réfléchi par le diviseur de faisceau de polarisation (12) générant le faisceau partiel inactif (7 ou 6).

8. Dispositif selon la revendication 7,
**caractérisé en ce que**
le convertisseur de polarisation (34), commandé, est un modulateur électro-optique.

9. Dispositif selon l'une quelconque des revendications 7 ou 8,
**caractérisé en ce que**
le convertisseur de polarisation (35) est une plaque d'ondes.

10. Dispositif selon l'une quelconque des revendications 7 à 9,
**caractérisé par**
un générateur d'impulsions de rotation (36) couplé à l'unité de déflexion (2) qui génère le signal de commande du convertisseur de polarisation commandé (35), le signal de commande fixant dans chaque rotation de l'unité de déflexion (2) un intervalle de temps de travail dans lequel un faisceau partiel (6 ou 7) est mis en oeuvre et l'autre faisceau partiel (7 ou 8) est coupé.
